# EUROPEAN PATENT SPECIFICATION

(11) **EP 3 468 873 B1**
(45) Date of publication and mention of the grant of the patent: **05.05.2021**
(21) Application number: 17734480.1
(22) Date of filing: 06.06.2017
(51) Int. Cl.: B64D 29/06, B64D 29/08, F02K 1/76

(54) **SYSTEM FOR AND METHOD OF ACTUATING AN AIRCRAFT ENGINE NACELLE COWL**
SYSTEM UND VERFAHREN ZUR BETÄTIGUNG EINER TRIEBWERKSVERKLEIDUNGSTÜR EINES FLUGZEUGS
SYSTÈME ET PROCÉDÉ D'ACTIONNEMENT D'UN CAPOT DE NACELLE DE MOTEUR D'AVION

(30) Priority: 14.06.2016 US 201662349807 P
(43) Date of publication of application: 17.04.2019
(73) Proprietor: Airbus Canada Limited Partnership, Mirabel, QC J7N 3C6 (CA)
(72) Inventor: STAFFORD, Thierry, Montreal, Québec H2S 1J3 (CA)
(74) Representative: Gabriel, Franck
(86) International application number: PCT/IB2017/053331
(87) International publication number: WO 2017/216679

(56) References cited:
- WO-A2-2015/040170
- US-A- 4 399 966
- US-A- 5 944 285
- US-A1- 2009 065 634
- US-B1- 6 227 485

## Description

### FIELD

The present technology relates to systems and methods for actuating an aircraft cowl. In particular, the systems and methods allow detecting that current is drawn in a solenoid valve to cause an electrical motor to be powered.

### BACKGROUND

Aircraft engines frequently require operators to perform maintenance and/or repair work, typically during stopovers along a flight route and/or during pre-scheduled maintenances of the aircraft. Conventional aircraft cowls mounted on nacelles of the aircraft engines are constructed as two half cylinders hingedly attached to a mounting strut so that they may be pivoted upwardly away from an engine core to allow operators to access an engine core.

In order to ease opening and/or closing of aircraft cowls while limiting an amount of machinery to be brought next to the aircraft during maintenance operations (e.g., an external hydraulic pump), modern aircraft comprise self-contained opening and closing systems which are power-driven to allow easy opening and/or closing of heavy cowl doors. Such opening and closing systems are depicted in U.S. Patent 4,399,966 to The Boeing Company (the '966 patent). In particular, the '966 patent describes a motor-driven pump for pumping hydraulic fluid from a reservoir mounted on an aircraft engine through a control circuit which selectively channels the fluid to actuators associated with each of the cowl portions to move the cowl portions to their desired positions. The hydraulic control circuit comprises solenoid-actuated valves associated with each of the actuators and operable to selectively permit flow of fluid into and out of the actuators as is desired to open and close the cowl portions.

Document US patent 6 227 485 to Aerospatiale describes an opening device common to two adjacent aircraft engine nacelle covers were a single actuator is controlled so as to successively open two covers on the aircraft engine nacelle which are adjacent, successively forming two hinges.

Conventional configurations of such self-contained opening and closing systems typically require an electric motor to actuate the hydraulic pump so that, in turn, the hydraulic pump allows fluid to circulate in the hydraulic circuit. As electric motors may be subjected to burn out if they remain powered for too long, they cannot be left powered on permanently when the aircraft is on the ground. As a result, conventional configurations of such self-contained opening and closing systems rely on two different switches to actuate the opening and closing systems, a first switch allowing an operator to power the electrical engine and a second switch allowing the operator to command the opening of the aircraft cowl. Hence, the need for two different switches and two different actions to be undertaken by the operator.

As it may be appreciated, even though conventional configurations provide benefits, they come at the expense of additional system complexity, additional weight caused by the presence of certain sub-systems and/or a certain complexity of operation as particular sequences of steps are to be followed by the operator. Improvements may be therefore desirable.

### SUMMARY

In one aspect, various implementations of the present technology provide - in accordance with claim 1 - an aircraft engine nacelle comprising a cowl and a power door opening system for the aircraft cowl, whereby the power door system comprises:
a first control switch electrically connected to a power source, the first control switch being operable to transition between a first position and a second position;
a solenoid valve electrically connected to the control switch and in fluid communication with an hydraulic actuator and a fluid reservoir, the solenoid valve being selectively operable in a first mode to direct fluid from the fluid reservoir to the hydraulic actuator and in second mode to direct fluid from the hydraulic actuator to the fluid reservoir, the hydraulic actuator being mechanically connected to the aircraft cowl; and
an electrical system controller electrically connected to the solenoid valve and configured to (1) detect that current is drawn in the solenoid valve and, (2) upon detecting that the current is drawn in the solenoid valve, cause an electric motor to be powered, the electric motor being connected to an hydraulic pump, the hydraulic pump being in fluid communication with the solenoid valve and the fluid reservoir.

In another aspect, the electrical system controller further comprises a processor and a non-transitory computer-readable medium, the non-transitory computer-readable medium comprising control logic which, upon execution by the processor, causes detecting that current is drawn in the solenoid valve and upon detecting that the current is drawn in the solenoid valve, causing the electric motor to be powered.

In yet another aspect, causing the electric motor to be powered comprises transitioning a second control switch between an open position and a close position.

In another aspect, detecting that current is drawn in the solenoid valve comprises detecting that an intensity of the current drawn in the solenoid valve is superior to 300mA.

In yet another aspect, detecting that current is drawn in the solenoid valve comprises detecting that an intensity of the current drawn in the solenoid valve is superior to 250mA.

In another aspect, detecting that current is drawn in the solenoid valve comprises detecting that an intensity of the current drawn in the solenoid valve is superior to 350mA.

In yet another aspect, transitioning the second control switch from the open position to the close position results in an activation of the hydraulic pump.

In another aspect, the electrical system controller comprises a secondary power distribution assembly (SPDA).

In yet another aspect, the SPDA comprises a Solid State Power Converter (SSPC), the SSPC comprising a programmable controller and a non-transitory computer-readable medium, the non-transitory computer-readable medium comprising control logic which, upon execution by the programmable controller, causes detecting that current is drawn in the solenoid valve and upon detecting that the current is drawn in the solenoid valve, causing the electric motor to be powered.

In another aspect, the first position is associated with an aircraft cowl open position and the second position is associated with an aircraft cowl close position.

In yet another aspect, the power source comprises at least one of a power pack, a battery, an electric backbone of the aircraft and an external electric system.

In another aspect, the first mode is associated with an opening of the aircraft cowl and the second mode is associated with a closing of the aircraft cowl.

In another aspect, various implementations of the present technology provide a method of actuating a cowl door, in accordance with claim 11, the method comprising:
detecting that current is drawn in a solenoid valve, the solenoid valve being selectively operable in a first mode to direct fluid from a fluid reservoir to an hydraulic actuator and in second mode to direct fluid from the hydraulic actuator to the fluid reservoir; and
causing an electric motor to be powered based on the detection that current is drawn in the solenoid valve for actuating the cowl door, the electric motor being connected to a hydraulic pump in fluid communication with the solenoid valve, the hydraulic actuator and the fluid reservoir.

In yet another aspect, the method further comprises:
if the solenoid valve is in the first mode of operation:
causing the hydraulic pump to direct fluid from the fluid reservoir to the hydraulic actuator; and
causing the hydraulic actuator to open the cowl door.

In another aspect, the method further comprises:
if the solenoid valve is in the second mode of operation:
causing the hydraulic pump to direct fluid from the hydraulic actuator to the fluid reservoir; and
causing the hydraulic actuator to close the cowl door.

In yet another aspect, causing the electric motor to be powered based on the detection that current is drawn in the solenoid valve comprises causing the electric motor to be powered solely based on the detection that current is drawn in the solenoid valve.

In another aspect, detecting that current is drawn in the solenoid valve comprises detecting that an intensity of the current drawn in the solenoid valve is superior to 300mA.

In yet another aspect, causing the electric motor to be powered based on the detection that current is drawn in the solenoid valve comprises automatically transitioning a second control switch from an open position to a close position.

In another aspect, transitioning the second control switch from the open position to the close position results in an activation of the hydraulic pump.

In other aspects, various implementations of the present technology provide - according to claim 21 - a non-transitory computer-readable medium storing program instructions for actuating an aircraft cowl, the program instructions being executable by a processor of a computer-based system to carry out one or more of the above-recited methods.

In other aspects, various implementations of the present technology provide - in accordance with claims 18 and 19 - a computer-based system, such as, for example, but without being limitative, an electrical system controller comprising at least one processor and a memory storing program instructions for actuating an aircraft cowl, the program instructions being executable by the at least one processor of the electrical system controller to carry out one or more of the above-recited methods.

In the context of the present specification, unless expressly provided otherwise, a computer system may refer, but is not limited to, an "electronic device", a "controller", a "control computer", a "control system", a "computer-based system" and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view taken from a top, front, left side of an aircraft;
Figure 2 is a left side elevation view of an engine assembly and a portion of fuselage of the aircraft of Fig. 1;
Figure 3 is a diagram of a power door opening system in accordance with an embodiment of the present technology;
Figure 4 is a diagram of a computing environment in accordance with an embodiment of the present technology; and
Figure 5 is a diagram illustrating a flowchart illustrating a computer-implemented method implementing embodiments of the present technology.

It should also be noted that, unless otherwise explicitly specified herein, the drawings are not to scale.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present invention as defined by the appended claims.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present invention.

Further, where no examples of modifications have been set forth, it should not be interpreted that no modifications are possible and/or that what is described is the sole manner of implementing that element of the present technology.

Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor" or a "controller", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a digital signal processor (DSP). Moreover, explicit use of the term "processor" or "controller" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, we will now consider some non-limiting examples to illustrate various implementations of aspects of the present technology.

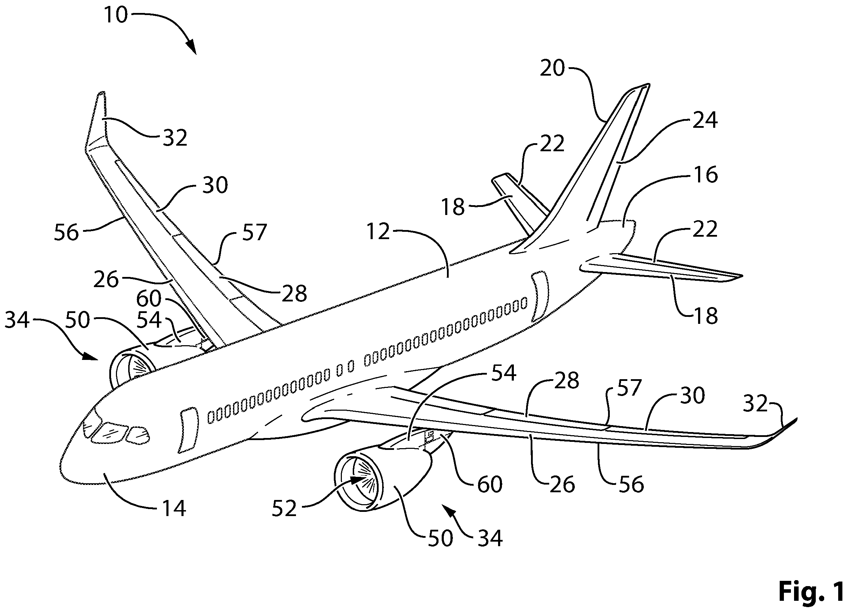

Referring to FIG. 1, there is shown an aircraft 10. The aircraft 10 is an exemplary implementation of an aircraft and other types of aircraft are contemplated. The aircraft 10 has a fuselage 12, a cockpit 14 at a front of the fuselage 12 and a tail 16 at a rear of the fuselage 12. The tail 16 has left and right horizontal stabilizers 18 and a vertical stabilizer 20. Each horizontal stabilizer 18 is provided with an elevator 22 used to control the pitch of the aircraft 10. The vertical stabilizer 20 is provided with a rudder 24 used to control the yaw of the aircraft 10. The aircraft 10 also has a pair of wings 26. The left wing 26 is connected to the fuselage 12 and extends on a left side thereof. The right wing 26 is connected to the fuselage 12 and extends on a right side thereof. The wings 26 are provided with flaps 28 and ailerons 30. The flaps 28 are used to control the lift of the aircraft 10 and the ailerons 30 are used to control the roll of the aircraft 10. Optionally, each wing 26 is provided with a winglet 32 at a tip thereof. Left and right engine assemblies 34 are connected to a bottom of the left and right wings 26 respectively, as will be described in greater detail below. It is contemplated that more than one engine assembly 34 could be connected to each wing 26. The aircraft 10 is provided with many more components and systems, such as a landing gear and auxiliary power unit, which will not be described herein.

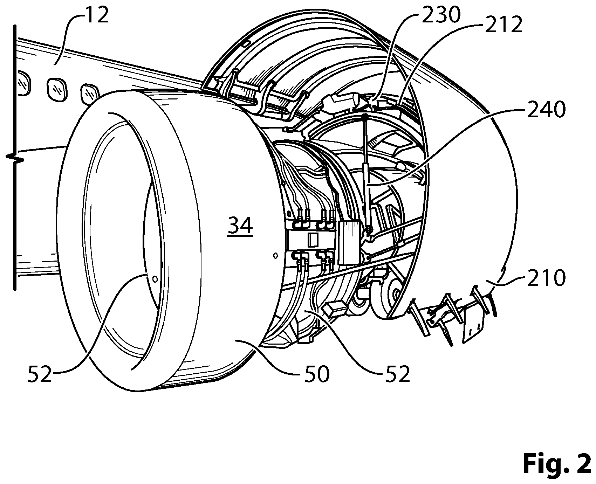

Referring now concurrently to FIG. 1 and 2, the left engine assembly 34 will be described in more detail. As the right engine assembly 34 is similar to the left engine assembly 34, it will not be described in detail herein. Elements of the right engine assembly 34 that correspond to those of the left engine assembly 34 have been labeled with the same reference in the figures.

The left engine assembly 34 has a nacelle 50 inside which is an engine 52. In the present implementation, the engine 52 is a turbofan engine such as the Pratt & Whitney™ PW1500G™ turbofan engine. It is contemplated that other turbofan engines could be used. It is also contemplated that an engine other than a turbofan engine could be used.

A pylon 54 is connected between the nacelle 50 and a bottom of the left wing 26, thereby connecting the engine 52 to the left wing 26. The pylon 54 extends along a top of the nacelle 50. A majority of the pylon 54 extends forward of a leading edge 56 of the left wing 26. The top, rear portion of the pylon 54 connects to the bottom, front portion of the wing 26.

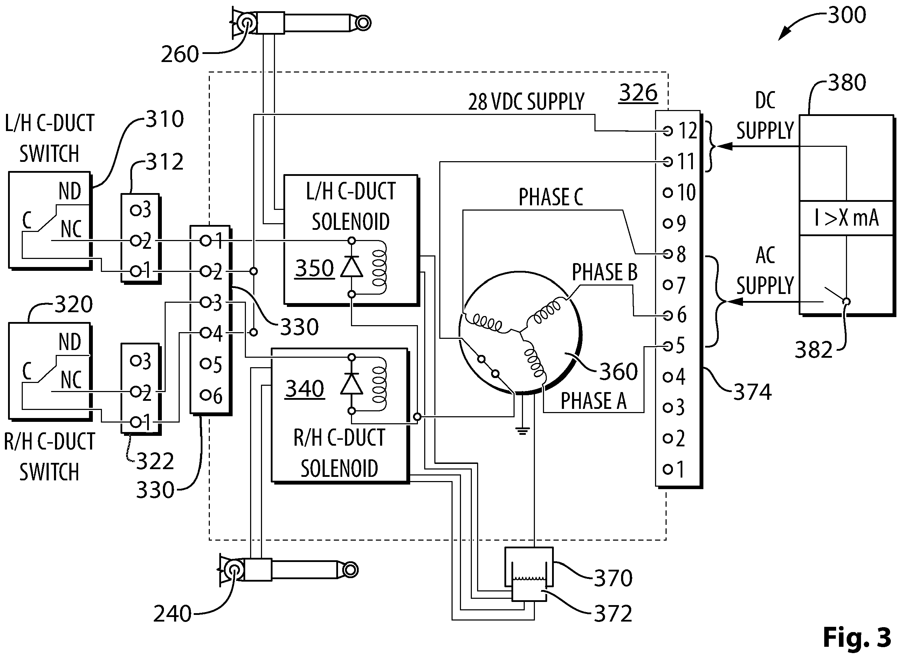

As can be seen in FIG. 2, the engine assembly 34 is also provided with a first cowl 210 (which may also equally be referred to as a fan cowl) and a second cowl 212 (which may also equally be referred to as a thrust reverser cowl). The first cowl 210 defines a first door which may give access to a first portion of the engine 52. The second cowl 212 defines a second door which may give access to a second portion of the engine 52. The first cowl 210 and the second cowl 212 may define portions of the nacelle 50 and be shaped so as to define an aerodynamic profile of the nacelle 50. The first cowl 210 and the second cowl 212 may also be referred to as fairing components. As illustrated in FIG. 2, the second cowl 212 defines an outer surface of a right thrust reverser panel 230 (also referred to as a right C-Duct panel) when the nacelle 50 is observed from a front of the left engine 52. The right thrust reverser panel 230 is illustrated in an open position thereby providing access to the second portion of the engine 52. The right thrust reverser panel 230 is mechanically connected to a first actuator 240. In some embodiments, the first actuator 240 allow an automatic opening and/or closing of the right thrust reverser panel 230 as will be discussed in further details in connection with the description of FIG. 3.

In the present embodiment, the right thrust reverser panel 230 is part of a thrust reverser system. The thrust reverser system may be used to redirect some of the thrust generated by the engine 52 once the aircraft 10 has touched down during a landing. In the present implementation, the thrust reverser system is a coldstream-type thrust reverser system and comprises the right thrust reverser panel 230 and a left thrust reverser panel (not shown). In some embodiments, the left thrust reverser panel (also referred to as a left C-Duct panel) may be symmetrical to the right thrust reverser panel 230 about a vertical plan positioned at a center of the nacelle 50. The left thrust reverser panel may be mechanically connected to a second actuator 260 so as to allow an automatic opening and/or closing of the left thrust reverser panel. When the thrust reverser system is actuated, the right thrust reverser panel 230 and the left thrust reverser panel (which are both in a closed position when the aircraft is operated) are displaced rearward over the rear portion of the nacelle 50. As the right thrust reverser panel 230 and the left thrust reverser panel are displaced rearward, a blocking mechanism (not shown) blocks the passage of air toward the back of the engine 52 and redirects it toward cascade vanes (not shown). The cascade vanes direct the air toward a front of the aircraft 10, thereby creating a reverse thrust. When the thrust reverser system is not actuated, the right thrust reverser panel 230 and the left thrust reverser panel are flush with an outer skin of the nacelle 50 as can be seen in FIG. 1, and the cascade vanes are covered by the right thrust reverser panel 230 and the left thrust reverser panel. Hydraulic lock actuators (not shown) lock the right thrust reverser panel 230 and the left thrust reverser panel in their closed positions to prevent the accidental deployment of the thrust reverser system when the aircraft 10 is not on the ground. When the aircraft is on the ground and an opening/closing command is inputted by a maintenance operator, the hydraulic lock actuators may unlock the right thrust reverser panel 230 and the left thrust reverser panel to allow an opening of the right thrust reverser panel 230 and the left thrust reverser panel for maintenance operations. It is contemplated that other types of thrust reverser systems could be used, such as, but not limited to, clamshell-type thrust reverser systems and bucket-type thrust reverser systems.

Turning now to FIG. 3, a diagram of a power door opening system (PDOS) 300 in accordance with an embodiment of the present technology is shown. The PDOS 300 may be integrated within the nacelle 50 and/or be part of the engine 52. In some alternative embodiments, at least some sub-systems of the PDOS 300 may be located elsewhere in the aircraft, such as, for example, but without being limited to, in the pylon 54 and/or the fuselage 12. In the embodiment illustrated at FIG. 3, the PDOS 300 comprises a left H C-Duct switch 310 and a right H C-Duct switch 320. The left H C-Duct switch 310 and the right H C-Duct switch 320 are connected to a switch connector 312 and a switch connector 322, respectively. The switch connector 312 and the switch connector 322 are connected to a power pack 326 via a switch signal connector 330. In some embodiments, the left H C-Duct switch 310 and the right H C-Duct switch 320 are located within the nacelle 50 so as to be accessible by a maintenance operator. In some alternative embodiments, the left H C-Duct switch 310 and the right H C-Duct switch 320 may be located elsewhere in the aircraft. In yet some other embodiments, the left H C-Duct switch 310 and the right H C-Duct switch 320 may be, at least partially, virtualized so as to be operable via a software command issued from a system of the aircraft or a system associated with the maintenance operator (e.g., a tablet operating a maintenance software module issuing a command directed to at least one of the left H C-Duct switch 310 and the right H C-Duct switch 320). In some embodiments, the left H C-Duct switch 310 and the right H C-Duct switch 320 are associated with the left thrust reverser panel and the right thrust reverser panel 230, respectively. In such embodiments, the left H C-Duct switch 310 may allow controlling an opening and/or a closing of the left thrust reverser panel and the right H C-Duct switch 320 may allow controlling an opening and/or a closing of the right thrust reverser panel 230. The left H C-Duct switch 310 and the right H C-Duct switch 320 may be powered by the power pack 326.

In some embodiments, current is provided to the left H C-Duct switch 310 and the right H C-Duct switch 320 only when certain aircraft operation conditions are met. In some embodiments, current is provided to the left H C-Duct switch 310 and the right H C-Duct switch 320 only when the aircraft is on the ground and the engines are turned off. In some alternative embodiments, current is provided to the left H C-Duct switch 310 and the right H C-Duct switch 320 only when the aircraft is on the ground. As an example, a sensor located on at least one of the landing gears may detect that the aircraft is on the ground and transmit a signal to the power pack 326 and/or the electrical system controller 380 which, in turn, powers on the left H C-Duct switch 310 and the right H C-Duct switch 320.

In some embodiments, each one of the left H C-Duct switch 310 and the right H C-Duct switch 320 may be operable to transition from a first position associated with an opening of an aircraft cowl and a second position associated with a closing of the aircraft cowl. In some embodiments, transitioning one of the left H C-Duct switch 310 and the right H C-Duct switch 320 from either the first position to the second position or the second position to the first position, may cause electric current to be supplied to a left H C-Duct solenoid valve 350 and/or to a right H C-Duct solenoid valve 340.

In the embodiment exemplified at FIG. 3, the switch signal connector 330 connects the left H C-Duct switch 310 to the left H C-Duct solenoid valve 350 and the right H C-Duct switch 320 to the right H C-Duct solenoid valve 340. In some embodiments, the left H C-Duct solenoid valve 350 and the right H C-Duct solenoid valve 340 may be implemented as an electromechanically operated valve. As it may become apparent to a person skilled in the art of the present technology, the left H C-Duct solenoid valve 350 and the right H C-Duct solenoid valve 340 may be controlled by an electric current through a solenoid allowing each one of the left H C-Duct solenoid valve 350 and the right H C-Duct solenoid valve 340 to be switched from a first mode to a second mode by modifying the outflow. The left H C-Duct solenoid valve 350 and the right H C-Duct solenoid valve 340 may have one or more fluid outlets. In the illustrated embodiment, each one of the left H C-Duct solenoid valve 350 and the right H C-Duct solenoid valve 340 are in fluid communication with a fluid reservoir 372. The fluid reservoir 372 is associated with an hydraulic pump 370.

The right H C-Duct solenoid valve 340 is in fluid communication with the first actuator 240. The left H C-Duct solenoid valve 350 is in fluid communication with the second actuator 260. In some embodiments, the right H C-Duct solenoid valve 340 may direct fluid from the fluid reservoir 372 to the first actuator 240 when the right H C-Duct solenoid valve 340 is operating in the first mode. Alternatively, the right H C-Duct solenoid valve 340 may direct fluid from the first actuator 240 to the fluid reservoir 372 when the right H C-Duct solenoid valve 340 is operating in the second mode. Under such embodiments, the first mode is associated with an opening of the aircraft cowl 212 (which, in some embodiments, may also be equated to the opening of the right thrust reverser panel 230) and the second mode is associated with a closing of the aircraft cowl (which, in some embodiments, may also be equated to the closing of the right thrust reverser panel 230).

Similarly to the right H C-Duct solenoid valve 340, the left H C-Duct solenoid valve 350 may direct fluid from the fluid reservoir 372 to the second actuator 260 when the left H C-Duct solenoid valve 350 is operating in the first mode. Alternatively, the left H C-Duct solenoid valve 350 may direct fluid from the second actuator 260 to the fluid reservoir 372 when the left H C-Duct solenoid valve 350 is operating in the second mode. Under such embodiments, the first mode is associated with an opening of a second aircraft cowl (not shown) which, in some embodiments, may also be equated to the opening of the left thrust reverser panel. The second mode is associated with a closing of a second aircraft cowl which, in some embodiments, may also be equated to the closing of the left thrust reverser panel. In alternative embodiments, the right H C-Duct solenoid valve 340 and the left H C-Duct solenoid valve 350 may each be associated with two or more actuators.

As the person skilled in the art of the present technology will appreciate, multiple variations as to (1) how the right H C-Duct solenoid valve 340 and the left H C-Duct solenoid valve 350 may be implemented and (2) how the right H C-Duct solenoid valve 340 and the left H C-Duct solenoid valve 350 may interact with other electrical and/or hydraulic systems may be envisioned without departing from the scope of the present technology.

The power pack 326 also comprises a switch signal connector 374 which may provide electric current to an electric motor 360. In the illustrated embodiment, the switch signal connector 374 may also provide electric current to the switch signal connector 330, the right H C-Duct solenoid valve 340 and the left H C-Duct solenoid valve 350. The switch signal connector 374 is connected to the electrical system controller 380. The electrical system controller 380 may cause the power pack 326 to supply direct current (DC) and/or alternating current (AC) to the various systems of the PDOS 300. For example, but without being limitative, 28V DC current may be supplied to the right H C-Duct solenoid valve 340 and the left H C-Duct solenoid valve 350 and AC current may be supplied to the electric motor 360. In the illustrated example, the electric motor 360 may be provided with triple phase current (illustrated by a Phase A, a Phase B and a Phase C).

As illustrated in FIG. 3, the electrical system controller 380 is connected (via the switch signal connector 374) to the right H C-Duct solenoid valve 340 and the left H C-Duct solenoid valve 350. In some embodiments, the electrical system controller 380 is configured, via hardware circuitry and/or embedded software, to detect that current is drawn in at least one of the right H C-Duct solenoid valve 340 and the left H C-Duct solenoid valve 350. In some embodiments, upon detecting that the current is drawn in the solenoid valve, the electrical system controller 380 causes the electric motor 360 to be powered via a control switch 382 (which may equally be referred to as a "second control switch"). As a person skilled in the art of the present technology may appreciate, the electrical system controller 380 thereby allows to automatically power the electric motor 360 without any further manual intervention from an operator. As a result, the operator, by solely activating at least one of the left H C-Duct switch 310 and the right H C-Duct switch 320 may cause the opening or the closing of at least one of the left thrust reverser panel and the right thrust reverser panel 230 thereby avoiding the need for a second switch to be operated specifically for powering on the electric motor 360. Other benefits may also become apparent to a person skilled in the art of the present technology.

The electrical system controller 380 comprises the control switch 382 which may be relied upon to cause the electric motor 360 to be powered by transitioning the control switch 382 from an open position to a close position. In some embodiments, the electrical system controller 380 causes the control switch 382 to transition from the open position to the close position. In some embodiments, detecting that current is drawn in at least one of the right H C-Duct solenoid valve 340 and the left H C-Duct solenoid valve 350 comprises determining, by the electrical system controller, that current is consumed by the at least one of the right H C-Duct solenoid valve 340 and the left H C-Duct solenoid valve 350.

In some embodiments, when one of the right H C-Duct solenoid valve 340 and the left H C-Duct solenoid valve 350 transitions from either the first mode to the second mode or from the second mode to the first mode (for example, after an operator has interacted with the left H C-Duct switch 310 and/or the right H C-Duct switch 320), electric current is consumed. In some embodiments, the electrical system controller 380 relies on a determination that current is consumed by one of the right H C-Duct solenoid valve 340 and the left H C-Duct solenoid valve 350 to cause the electric motor 360 to be powered.

In some embodiments, the electrical system controller 380 may be configured so as to determine that an intensity of the current drawn in the at least one of the right H C-Duct solenoid valve 340 and the left H C-Duct solenoid valve 350 is superior to 300mA. In some alternative embodiments, this determination may be made if the intensity of the current is about 300mA. In yet some alternative embodiments, this determination may be made if the intensity of the current is superior to 250mA. In yet some alternative embodiments, this determination may be made if the intensity of the current is superior to 350mA. As the person skilled in the art of the present technology may appreciate, multiple variations may be envisioned without departing from the scope of the present technology.

In some embodiments, the electrical system controller 380 may comprise a secondary power distribution assembly (SPDA) which may be connected to a primary power distribution system (PPDS) thereby allowing to rely on an electric architecture distributed in various parts of the aircraft. In some embodiments, the SPDA may comprise a solid state power converter (SSPC) comprising a programmable controller and a non-transitory computer-readable medium.

In some embodiments, once the control switch 382 transitions from the open position to the close position, the electric motor 360 is powered thereby driving the hydraulic pump 370. As the person skilled in the art of the present technology may appreciate, the electric motor 360 may be mechanically connected to the hydraulic pump 370 in accordance with arrangement known in the art of the present technology. The electric motor 360 may be implemented in multiple ways and selected so as to be able to appropriately drive the hydraulic pump 370. Once activated, the hydraulic pump 370 may cause fluid to flow from the hydraulic reservoir 372 to the actuators 240, 260 or from the actuators 240, 260 to the hydraulic reservoir 372 (depending on the configuration of each one of the right H C-Duct solenoid valve 340 and the left H C-Duct solenoid valve 350 at a given time).

In some embodiments, the power pack 326 may comprise a power source so as to provide electric current to the various systems, such as the left H C-Duct switch 310, the right H C-Duct switch 320, the right H C-Duct solenoid valve 340, the left H C-Duct solenoid valve 350, the electric motor 360 and the electrical system controller 380. In some embodiments, the power source may be the power pack 326 itself (e.g., a battery embedded within the power pack). Alternatively, the power source may be one of the aircraft systems connected to the electric backbone of the aircraft (e.g., an auxiliary power unit (APU)) or an external system (e.g., an electrical source located on the ground). In some embodiments, the power pack 326 may define a single unit comprising all or at least some of the systems illustrated at FIG. 3, namely, the left H C-Duct switch 310, the right H C-Duct switch 320, the right H C-Duct solenoid valve 340, the left H C-Duct solenoid valve 350, the electric motor 360 and the electrical system controller 380.

Even though reference is made to the actuators 240, 260, the left H C-Duct switch 310, the right H C-Duct switch 320, the right H C-Duct solenoid valve 340 and the left H C-Duct solenoid valve 350, it should be understood that more or less actuators, switches and/or solenoid valves may be used without departing from the scope of the present technology. For example, the present technology may be implemented based on a single switch, a single solenoid valve and multiple actuators mechanically connected to an aircraft cowl. Multiple variations may therefore be envisioned and will become apparent to the person skilled in the art of the present technology.

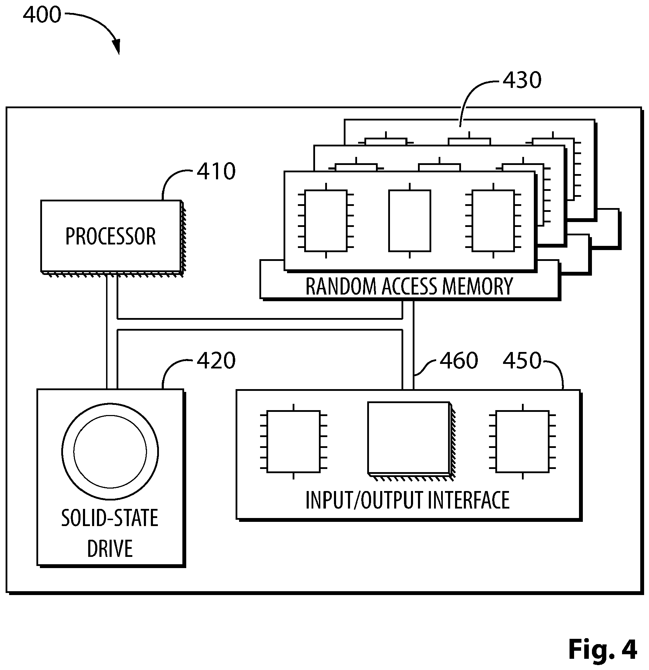

Turning now to FIG. 4, a diagram of a computing environment 400 in accordance with an embodiment of the present technology is shown. In some embodiments, the computing environment 400 may be implemented by the electrical system controller 380, for example, but without being limited to, embodiments wherein the electrical system controller 380 comprises a SPDA and/or a PPDS and/or a SSPC. In some embodiments, the computing environment 400 comprises various hardware components including one or more single or multi-core processors collectively represented by a processor 410, a solid-state drive 420, a random access memory 430 and an input/output interface 450. The computing environment 400 may be a computer specifically designed for installation into an aircraft. In some alternative embodiments, the computing environment 400 may be a generic computer system adapted to meet certain requirements, such as, but not limited to, certification requirements. The computing environment 400 may be an "electronic device", a "controller", a "control computer", a "control system", a "computer-based system" and/or any combination thereof appropriate to the relevant task at hand. In some embodiments, the computing environment 400 may also be a sub-system of one of the above-listed systems. In some other embodiments, the computing environment 400 may be an "off the shelf' generic computer system. In some embodiments, the computing environment 400 may also be distributed amongst multiple systems. The computing environment 400 may also be specifically dedicated to the implementation of the present technology. As a person in the art of the present technology may appreciate, multiple variations as to how the computing environment 400 is implemented may be envisioned without departing from the scope of the present technology.

Communication between the various components of the computing environment 400 may be enabled by one or more internal and/or external buses 460 (e.g. a PCI bus, universal serial bus, IEEE 1394 "Firewire" bus, SCSI bus, Serial-ATA bus, ARINC bus, etc.), to which the various hardware components are electronically coupled.

The input/output interface 450 may be coupled to the left H C-Duct switch 310, the right H C-Duct switch 320, the right H C-Duct solenoid valve 340, the left H C-Duct solenoid valve 350, the electric motor 360 and/or the electrical system controller 380.

According to implementations of the present technology, the solid-state drive 420 stores program instructions suitable for being loaded into the random access memory 430 and executed by the processor 410 for actuating an aircraft cowl. For example, the program instructions may be part of a library or an application.

In some embodiments, the computing environment 400 may be configured so as to detect that current is drawn in at least one of the right H C-Duct solenoid valve 340, the left H C-Duct and cause the electric motor 360 to be powered based on the detection that current is drawn in the solenoid valve (e.g., without any further manual action from a maintenance operator).

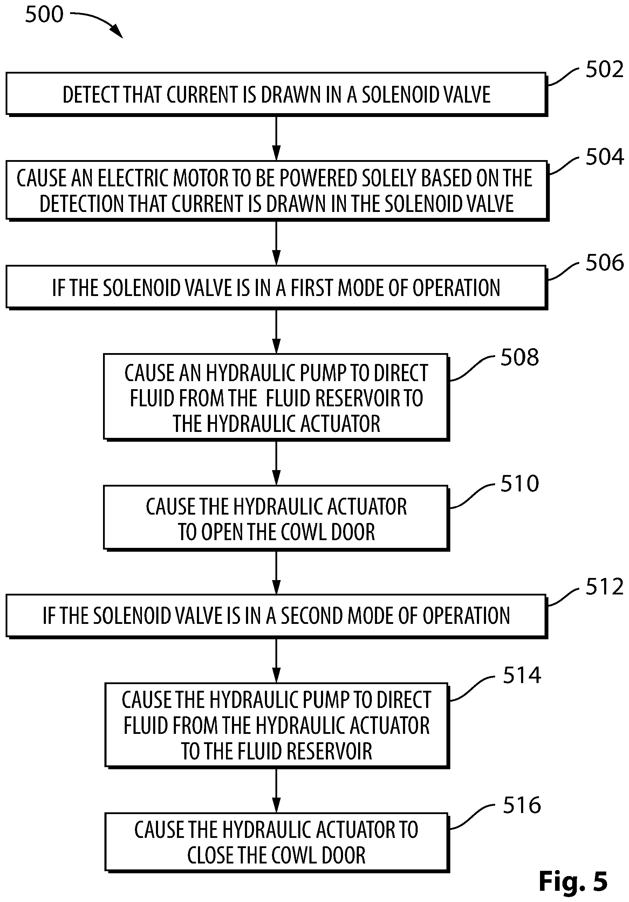

Turning now to FIG. 5, a flowchart illustrating a computer-implemented method 500 of actuating an aircraft cowl is illustrated. Even though reference is generally made to a method of actuating an aircraft cowl, it should be understood that in the present context, the aircraft cowl may encompass various fairing components, panels and/or doors used in connection with a nacelle and that may be actuated so as to provide access to an aircraft engine. Such aircraft cowl may encompass, for example, but without being limited to, the right thrust reverser panel 230, the left thrust reverser panel, the first cowl 210 and/or the second cowl 212. In some embodiments, the computer-implemented method 500 may be (completely or partially) implemented on the electrical system controller 380 and/or the computing environment 400.

The method 500 starts at step 502 by detecting that current is drawn in a solenoid valve. In some embodiments, the solenoid valve may be selectively operable in a first mode to direct fluid from a fluid reservoir to an hydraulic actuator and in second mode to direct fluid from the hydraulic actuator to the fluid reservoir. In some embodiments, the solenoid valve may be similar to the at least one of the right H C-Duct solenoid valve 340 and the left H C-Duct solenoid valve 350. In some embodiments, the fluid reservoir may be similar to the fluid reservoir 372 and the hydraulic actuator may be similar to one of the first actuator 240 and/or the second actuator 260. In some embodiments, detecting that current is drawn in the solenoid valve comprises detecting that an intensity of the current drawn in the solenoid valve is superior to 300mA.

At step 504, the method causes an electric motor to be powered based on the detection that current is drawn in the solenoid valve. In some embodiments, causing the electric motor to be powered based on the detection that current is drawn in the solenoid valve comprises automatically transitioning a second control switch from an open position to a closed position. In some embodiments, the second control switch may be similar to the control switch 382. In some embodiments, transitioning the second control switch from the open position to the closed position results in an activation of the hydraulic pump. In some embodiments, step 504 may occur without any additional action to be required by an operator and/or any signal sensed from the system. In other words, the step 502 may be sufficient to cause the electric motor to be powered on. In some embodiments, step 504 may allow an operator to actuate the aircraft cowl by solely interacting with the left H C-Duct switch 310 and/or the right H C-Duct switch 320 and without requiring interaction with an additional switch dedicated to powering on the electric motor.

At a step 506, if the solenoid valve is in a first mode of operation, the method 500 proceeds to steps 508 and 510. The step 508 comprises causing an hydraulic pump to direct fluid from the fluid reservoir to the hydraulic actuator. In some embodiments, the hydraulic pump may be similar to the hydraulic pump 370. The step 510 comprises causing the hydraulic actuator to open the cowl door. As a person skilled in the art may appreciate, steps 508 and 510 may occur simultaneously.

At a step 512, if the solenoid valve is in the second mode of operation, the method 500 proceeds to steps 514 and 516. The step 514 comprises causing the hydraulic pump to direct fluid from the hydraulic actuator to the fluid reservoir. The step 516 comprises causing the hydraulic actuator to close the cowl door. As a person skilled in the art may appreciate, steps 514 and 516 may occur simultaneously.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enjoying other technical effects or none at all.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. An aircraft engine nacelle (50) comprising an aircraft cowl (210, 212) and a power door opening system (300) for the aircraft cowl (212, 210), whereby the power door opening system (300)comprises:
a first control switch (310, 320), in use, electrically connected to a power source (362), the first control switch (310, 320) being operable to transition between a first position and a second position;
a solenoid valve (340, 350) electrically connected to the control switch (310, 320) and, in use, in fluid communication with an hydraulic actuator (240, 250, 260, 270) and a fluid reservoir (372), the solenoid valve (340, 350) being selectively operable in a first mode to direct fluid from the fluid reservoir (372) to the hydraulic actuator (240, 250, 260, 270) and in second mode to direct fluid from the hydraulic actuator (240, 250, 260, 270) to the fluid reservoir (372), the hydraulic actuator (240, 250, 260, 70), in use, being mechanically connected to the aircraft cowl (210, 212);
**characterized in that** the power door opening system (300) comprises:
an electrical system controller (380) electrically connected to the solenoid valve (340, 350) and configured to (1) detect that current is drawn in the solenoid valve (340, 350) and, (2) upon detecting that the current is drawn in the solenoid valve (340, 350), cause an electric motor (360) to be powered, the electric motor (360) being connected to an hydraulic pump (370), the hydraulic pump (370) being in fluid communication with the solenoid valve (340, 350) and the fluid reservoir (372).

2. The aircraft engine nacelle (50) of claim 1, wherein the electrical system controller (380) further comprises a processor (410) and a non-transitory computer-readable medium, the non-transitory computer-readable medium comprising control logic which, upon execution by the processor (410), causes detecting that current is drawn in the solenoid valve (340, 350) and upon detecting that the current is drawn in the solenoid valve (340, 350), causing the electric motor (360) to be powered.

3. The aircraft engine nacelle (50) of claim 1, wherein causing the electric motor (360) to be powered comprises transitioning a second control switch (382) between an open position and a close position.

4. The aircraft engine nacelle (50) of claim 1, wherein detecting that current is drawn in the solenoid valve (340, 350) comprises detecting that an intensity of the current drawn in the solenoid valve (340, 350) is superior to 300mA, or superior to 250mA, or superior to 350mA.

5. The aircraft engine nacelle (50) of claim 3, wherein transitioning the second control switch (382) from the open position to the close position results in an activation of the hydraulic pump (370).

6. The aircraft engine nacelle (50) of claim 1, wherein the electrical system controller (380) comprises a secondary power distribution assembly (SPDA).

7. The aircraft engine nacelle (50) of claim 6, wherein the SPDA comprises a Solid State Power Converter (SSPC), the SSPC comprising a programmable controller and a non-transitory computer-readable medium, the non-transitory computer-readable medium comprising control logic which, upon execution by the programmable controller, causes detecting that current is drawn in the solenoid valve (340, 350) and upon detecting that the current is drawn in the solenoid valve (340, 350), causing the electric motor (360) to be powered.

8. The aircraft engine nacelle (50) of claim 1, wherein the first position is associated with an aircraft cowl (210, 212) of the aircraft engine nacelle (50) open position and the second position is associated with an aircraft cowl (210, 212) of the aircraft engine nacelle (50) close position.

9. The aircraft engine nacelle (50) of claim 1, wherein the power source (362) comprises at least one of a power pack, a battery, an electric backbone of the aircraft and an external electric system.

10. The aircraft engine nacelle (50) of claim 1, wherein the first mode is associated with an opening of the aircraft cowl (210, 212) of the aircraft engine nacelle (50) and the second mode is associated with a closing of the aircraft cowl (210, 212) of the aircraft engine nacelle (50).

11. A method of actuating a cowl (210, 212) door of an aircraft engine nacelle (50), the method comprising:
detecting that current is drawn in a solenoid valve (340, 350), the solenoid valve (340, 350) being selectively operable in a first mode to direct fluid from a fluid reservoir (372) to an hydraulic actuator (240, 250, 260, 270) and in second mode to direct fluid from the hydraulic actuator (240, 250, 260, 270) to the fluid reservoir (372); and
causing an electric motor (360) to be powered based on the detection that current is drawn in the solenoid valve (340, 350) for actuating the cowl (210, 212) door, the electric motor (360) being connected to a hydraulic pump (370) in fluid communication with the solenoid valve (340, 350), the hydraulic actuator (240, 250, 260, 270) and the fluid reservoir (372);

12. The method of claim 11, further comprising:
if the solenoid valve (340, 350) is in the first mode of operation:
causing the hydraulic pump (370) to direct fluid from the fluid reservoir (372) to the hydraulic actuator (240, 250, 260, 270); and
causing the hydraulic actuator (240, 250, 260, 270) to open the cowl (210, 212) door.

13. The method of claim 11 or 12, further comprising:
if the solenoid valve (340, 350) is in the second mode of operation:
causing the hydraulic pump (370) to direct fluid from the hydraulic actuator (240, 250, 260, 270) to the fluid reservoir (372); and
causing the hydraulic actuator (240, 250, 260, 270) to close the cowl (210, 212) door.

14. The method of claim 11, wherein causing the electric motor (360) to be powered based on the detection that current is drawn in the solenoid valve (340, 350) comprises causing the electric motor (360) to be powered solely based on the detection that current is drawn in the solenoid valve (340, 350).

15. The method of claim 11, wherein detecting that current is drawn in the solenoid valve (340, 350) comprises detecting that an intensity of the current drawn in the solenoid valve (340, 350) is superior to 300mA.

16. The method of claim 11, wherein causing the electric motor (360) to be powered based on the detection that current is drawn in the solenoid valve (340, 350) comprises automatically transitioning a second control switch (382) from an open position to a close position.

17. The method of claim 16, wherein transitioning the second control switch (382) from the open position to the close position results in an activation of the hydraulic pump (370).

18. An electrical system controller (380), the controller comprising:
a processor (410);
a non-transitory computer-readable medium, the non-transitory computer-readable medium comprising control logic which, upon execution by the processor (410), causes the steps of the method of actuating a cowl door (210, 212) of any one of claims 11 to 13 and 15 to 17.

19. A computer-implemented system configured to perform the method of any one of claims 11 to 17.

20. An aircraft (10) comprising the computer-implemented system of claim 19.

21. A non-transitory computer-readable medium comprising computer-executable instructions that cause a system to execute the method according to any one of claims 11 to 17.

## Patentansprüche

1. Flugzeugtriebwerksgondel (50) mit einer Flugzeugverkleidung (210, 212) und mit einem angetriebenen Klappenöffnungssystem (300) für die Flugzeugverkleidung (212, 210), wobei das angetriebenen Klappenöffnungssystem (300)
einen ersten Steuerschalter (310, 320), der im Gebrauch elektrisch mit einer Energieversorgung (362) verbunden ist, wobei der erste Steuerschalter (310, 320) betätigbar ist, um zwischen einer ersten Stellung und einer zweiten Stellung zu wechseln, und
mit einem Magnetventil (340, 350), das elektrisch mit dem Steuerschalter (310, 320) verbunden ist sowie im Gebrauch mit einem hydraulischen Stellglied (240, 250, 260, 270) und mit einem Fluidvorrat (372) in Fluidverbindung steht, wobei das Magnetventil (340, 350) wahlweise in einem ersten Modus, um Fluid von dem Fluidvorrat (372) zu dem hydraulischen Stellglied (240, 250, 260, 270) zu leiten, und in einem zweiten Modus betreibbar ist, um Fluid von dem hydraulischen Stellglied (240, 250, 260, 270) zu dem Fluidvorrat (372) zu leiten, wobei das hydraulische Stellglied (240, 250, 260, 270) im Gebrauch mechanisch mit der Flugzeugverkleidung (210, 212) verbunden ist,
**dadurch gekennzeichnet, dass** das elektrische Klappenöffnungssystem (300)
eine elektrische Systemsteuerung (380) umfasst, die elektrisch mit dem Magnetventil (340, 350) verbunden und dazu eingerichtet ist, dass (1) erkennbar ist, ob in dem Magnetventil (340, 350) Strom gezogen wird, und (2) bei Erkennen, dass in dem Magnetventil (340, 350) Strom gezogen wird, bewirkbar ist, dass ein Elektromotor (360) mit Strom versorgbar ist, wobei der Elektromotor (360) mit einer Hydraulikpumpe (370) verbindbar ist und wobei die Hydraulikpumpe (370) mit dem Magnetventil (340, 350) sowie mit dem Fluidvorrat (372) in Fluidverbindung steht.

2. Flugzeugtriebwerksgondel (50) nach Anspruch 1, wobei die elektrische Systemsteuerung (380) ferner einen Prozessor (410) und ein nichtflüchtiges computerlesbares Medium umfasst, wobei das nichtflüchtige computerlesbare Medium eine Steuerlogik umfasst, die bei Ausführung durch den Prozessor (410) bewirkt, dass erkannt wird, dass Strom in das Magnetventil (340, 350) gezogen wird, und bei Erkennen, dass der Strom in das Magnetventil (340, 350) gezogen wird, bewirkt, dass der Elektromotor (360) mit Energie versorgt wird.

3. Flugzeugtriebwerksgondel (50) nach Anspruch 1, wobei das Bewirken der Energieversorgung des Elektromotors (360) das Umschalten eines zweiten Steuerschalters (382) zwischen einer offenen Position und einer geschlossenen Position umfasst.

4. Flugzeugtriebwerksgondel (50) nach Anspruch 1, wobei das Erfassen, dass in dem Magnetventil (340, 350) Strom gezogen wird, das Erfassen umfasst, dass eine Stärke des in dem Magnetventil (340, 350) gezogenen Stroms größer als 300mA oder größer als 250mA oder größer als 350mA ist.

5. Flugzeugtriebwerksgondel (50) nach Anspruch 3, wobei der Wechsel des zweiten Steuerschalters (382) von der offenen Stellung in die geschlossene Stellung zu einer Aktivierung der Hydraulikpumpe (370) führt.

6. Flugzeugtriebwerksgondel (50) nach Anspruch 1, wobei die elektrische Systemsteuerung (380) eine Sekundärstromverteilungsbaugruppe (SPDA) umfasst.

7. Flugzeugtriebwerksgondel (50) nach Anspruch 6, wobei die SPDA einen Festkörperleistungswandler (Solid State Power Converter - SSPC) umfasst, wobei der SSPC eine programmierbare Steuerung und ein nichtflüchtiges computerlesbares Medium umfasst, wobei das nichtflüchtige computerlesbare Medium eine Steuerlogik umfasst, die bei Ausführung durch die programmierbare Steuerung bewirkt, dass erkannt wird, dass Strom in das Magnetventil (340, 350) gezogen wird, und bei Erkennen, dass der Strom in das Magnetventil (340, 350) gezogen wird, bewirkt, dass der Elektromotor (360) mit Energie versorgt wird.

8. Flugzeugtriebwerksgondel (50) nach Anspruch 1, wobei die erste Stellung einer offenen Stellung einer Flugzeugverkleidung (210, 212) der Flugzeugtriebwerksgondel (50) zugeordnet ist und die zweite Stellung einer geschlossenen Stellung einer Flugzeugverkleidung (210, 212) der Flugzeugtriebwerksgondel (50) zugeordnet ist.

9. Flugzeugtriebwerksgondel (50) nach Anspruch 1, wobei die Energieversorgung (362) wenigstens ein Netzteil, eine Batterie, ein elektrisches Kernnetz des Flugzeugs oder ein externes elektrisches System umfasst.

10. Flugzeugtriebwerksgondel (50) nach Anspruch 1, wobei der erste Modus mit einem Öffnen der Flugzeugverkleidung (210, 212) der Flugzeugtriebwerksgondel (50) und der zweite Modus mit einem Schließen der Flugzeugverkleidung (210, 212) der Flugzeugtriebwerksgondel (50) verbunden ist.

11. Verfahren zum Betätigen einer Klappe der Verkleidung (210, 212) einer Flugzeugtriebwerksgondel (50), wobei das Verfahren
Erfassen, dass Strom in einem Magnetventil (340, 350) gezogen wird, wobei das Magnetventil (340, 350) wahlweise in einem ersten Modus, um Fluid von einem Fluidvorrat (372) zu einem hydraulischen Stellglied (240, 250, 260, 270) zu leiten, und in einem zweiten Modus betreibbar ist, um Fluid von dem hydraulischen Stellglied (240, 250, 260, 270) zu dem Fluidvorrat (372) zu leiten, und
Bewirken, dass ein Elektromotor (360) auf der Grundlage des Erkennens, dass in dem Magnetventil (340, 350) Strom gezogen wird, zum Betätigen der Klappe der Verkleidung (210, 212) mit Strom versorgt wird, wobei der Elektromotor (360) mit einer Hydraulikpumpe (370) verbunden ist, die mit dem Magnetventil (340, 350), dem hydraulischen Stellglied (240, 250, 260, 270) und dem Fluidvorrat (372) in Fluidverbindung steht.

12. Verfahren nach Anspruch 11, das weiterhin umfasst, dass
mit dem Magnetventil (340, 350) in dem ersten Betriebsmodus
die Hydraulikpumpe (370) veranlasst wird, Fluid aus dem Fluidvorrat (372) zu dem hydraulischen Stellglied (240, 250, 260, 270) zu leiten, und dass
das hydraulische Stellglied (240, 250, 260, 270) veranlasst wird, die Klappe der Verkleidung (210, 212) zu öffnen.

13. Verfahren nach Anspruch 11 oder 12, das weiterhin umfasst, dass mit dem Magnetventil (340, 350) in dem zweiten Betriebsmodus die Hydraulikpumpe (370) veranlasst wird, Fluid von dem hydraulischen Stellglied (240, 250, 260, 270) zu dem Fluidvorrat (372) zu leiten, und dass das hydraulische Stellglied (240, 250, 260, 270) veranlasst wird, die Klappe der Verkleidung (210, 212) zu schließen.

14. Verfahren nach Anspruch 11, wobei das Veranlassen der Energieversorgung des Elektromotors (360) auf der Grundlage des Erkennens, ob in dem Magnetventil (340, 350) Strom gezogen wird, das Veranlassen der Energieversorgung des Elektromotors (360) ausschließlich auf der Grundlage des Erkennens, ob in dem Magnetventil (340, 350) Strom gezogen wird, umfasst.

15. Verfahren nach Anspruch 11, wobei das Erfassen, ob in dem Magnetventil (340, 350) Strom gezogen wird, das Erfassen umfasst, ob eine Stärke des in dem Magnetventil (340, 350) gezogenen Stroms größer als 300mA ist.

16. Verfahren nach Anspruch 11, wobei das Veranlassen der Energieversorgung des Elektromotors (360) auf der Grundlage des Erfassens, dass in dem Magnetventil (340, 350) Strom gezogen wird, das automatische Umschalten eines zweiten Steuerschalters (382) von einer offenen Stellung in eine geschlossene Stellung umfasst.

17. Verfahren nach Anspruch 16, wobei der Wechsel des zweiten Steuerschalters (382) von der offenen Stellung in die geschlossene Stellung zu einem Aktivieren der Hydraulikpumpe (370) führt.

18. Elektrische Systemsteuerung (380), wobei die Steuerung
einen Prozessor (410) und
ein nichtflüchtiges computerlesbares Medium aufweist, wobei das nichtflüchtige computerlesbare Medium eine Steuerlogik umfasst, die bei Ausführen durch den Prozessor (410) die Schritte des Verfahrens zum Bestätigen einer Verkleidungsklappe (210, 212) nach einem der Ansprüche 11 bis 13 und 15 bis 17 bewirkt.

19. Computerimplementiertes System, das zum Durchführen des Verfahrens nach einem der Ansprüche 11 bis 17 eingerichtet ist.

20. Flugzeug (10) mit dem computerimplementierten System nach Anspruch 19.

21. Nichtflüchtiges computerlesbares Medium mit durch einen Computer ausführbaren Befehlen, die ein System veranlassen, das Verfahren nach einem der Ansprüche 11 bis 17 auszuführen.

## Revendications

1. Une nacelle de moteur d'aéronef (50) comprenant un capot d'aéronef (210, 212) et un système d'ouverture de porte électrique (300) pour le capot d'aéronef (210, 212), dans lequel le système d'ouverture de porte électrique (300) comporte:
un premier interrupteur de commande (310, 320), en utilisation, connecté électriquement à une source d'alimentation (362), le premier interrupteur de commande (310, 320) pouvant être actionné pour passer d'une première position vers une seconde position;
une électrovanne (340, 350) connectée électriquement à l'interrupteur de commande (310, 320) et, en utilisation, en communication fluidique avec un actionneur hydraulique (240, 250, 260, 270) et un réservoir de fluide (372), l'électrovanne (340, 350) pouvant être actionné sélectivement dans un premier mode pour diriger le fluide du réservoir de fluide (372) vers l'actionneur hydraulique (240, 250, 260, 270) et dans un second mode pour diriger le fluide depuis l'actionneur hydraulique (240, 250, 260, 270) vers le réservoir de fluide (372), l'actionneur hydraulique (240, 250, 260, 270), en utilisation, étant relié mécaniquement au capot de l'aéronef (210, 212);
**caractérisée en ce que** le système d'ouverture de porte électrique (300) comporte:
un contrôleur de système électrique (380) connecté électriquement à l'électrovanne (340, 350) et configuré pour (1) détecter qu'un courant est tiré par l'électrovanne (340, 350) et, (2) lors de la détection que le courant est tiré par l'électrovanne (340, 350), provoquer la mise sous tension d'un moteur électrique (360), le moteur électrique (360) étant relié à une pompe hydraulique (370), la pompe hydraulique (370) étant en communication fluidique avec l'électrovanne (340, 350) et le réservoir de fluide (372).

2. La nacelle de moteur d'aéronef (50) selon la revendication 1, dans laquelle le contrôleur de système électrique (380) comprend en outre un processeur (410) et un support d'informations non transitoire lisible par ordinateur, le support d'informations non transitoire lisible par ordinateur comprenant une logique de commande qui, lors de l'exécution par le processeur (410), provoque la détection que du courant est tiré par l'électrovanne (340, 350) et lors de la détection que le courant est tiré par l'électrovanne (340, 350), provoque la mise sous tension du moteur électrique (360).

3. La nacelle de moteur d'aéronef (50) selon la revendication 1, dans laquelle provoquer la mise sous tension du moteur électrique (360) comprend faire passer un second interrupteur de commande (382) entre une position ouverte et une position fermée.

4. La nacelle de moteur d'aéronef (50) selon la revendication 1, dans laquelle détecter que du courant est tiré par l'électrovanne (340, 350) comprend détecter qu'une intensité du courant tiré par l'électrovanne (340, 350) est supérieure à 300 mA, ou supérieure à 250 mA, ou supérieure à 350 mA.

5. La nacelle de moteur d'aéronef (50) selon la revendication 3, dans laquelle faire passer le second interrupteur de commande (382) entre la position ouverte et la position fermée entraîne une activation de la pompe hydraulique (370).

6. La nacelle de moteur d'aéronef (50) selon la revendication 1, dans laquelle le contrôleur de système électrique (380) comprend un ensemble de distribution d'électricité secondaire (SPDA).

7. La nacelle de moteur d'aéronef (50) selon la revendication 6, dans laquelle le SPDA comprend un convertisseur de puissance à semi-conducteurs (SSPC), le SSPC comprenant un contrôleur programmable et un support d'informations non transitoire lisible par ordinateur, le support d'informations non transitoire lisible par ordinateur comprenant une logique de commande qui, lors de l'exécution par le contrôleur programmable, provoque la détection que du courant est tiré par l'électrovanne (340, 350) et lors de la détection que le courant est tiré par l'électrovanne (340, 350), provoque la mise sous tension du moteur électrique (360).

8. La nacelle de moteur d'aéronef (50) selon la revendication 1, dans laquelle la première position est associée à une position ouverte du capot d'aéronef (210, 212) de la nacelle de moteur d'aéronef (50) et la seconde position est associée à une position de fermeture du capot d'aéronef (210, 212) de la nacelle de moteur d'aéronef (50).

9. La nacelle de moteur d'aéronef (50) selon la revendication 1, dans laquelle la source d'alimentation (362) comprend au moins l'un parmi un bloc d'alimentation, une batterie, un système électrique de base de l'aéronef et un système électrique externe.

10. La nacelle de moteur d'aéronef (50) selon la revendication 1, dans laquelle le premier mode est associé à une ouverture du capot d'aéronef (210, 212) de la nacelle de moteur d'aéronef (50) et le second mode est associé à une fermeture du capot d'aéronef (210, 212) de la nacelle de moteur d'aéronef (50).

11. Une méthode d'activation d'une porte de capot (210, 212) d'une nacelle de moteur d'aéronef (50), la méthode comprenant:
détecter qu'un courant est tiré par une électrovanne (340, 350), l'électrovanne (340, 350) pouvant être actionnée sélectivement dans un premier mode pour diriger du fluide d'un réservoir de fluide (372) vers un actionneur hydraulique (240, 250, 260, 270) et dans un second mode pour diriger du fluide depuis l'actionneur hydraulique (240, 250, 260, 270) vers le réservoir de fluide (372); et
provoquer la mise sous tension d'un moteur électrique (360) en fonction de la détection que du courant est tiré par l'électrovanne (340, 350) pour activer la porte de capot (210, 212), le moteur électrique (360) étant relié à une pompe hydraulique (370) en communication fluidique avec l'électrovanne (340, 350), l'actionneur hydraulique (240, 250, 260, 270) et le réservoir de fluide (372).

12. La méthode selon la revendication 11, comprenant en outre:
si l'électrovanne (340, 350) est dans le premier mode de fonctionnement:
amener la pompe hydraulique (370) à diriger le fluide du réservoir de fluide (372) vers l'actionneur hydraulique (240, 250, 260, 270); et
amener l'actionneur hydraulique (240, 250, 260, 270) à ouvrir la porte du capot (210, 212).

13. La méthode selon la revendication 11 ou 12, comprenant en outre:
si l'électrovanne (340, 350) est dans le second mode de fonctionnement:
amener la pompe hydraulique (370) à diriger le fluide de l'actionneur hydraulique (240, 250, 260, 270) vers le réservoir de fluide (372); et
amener l'actionneur hydraulique (240, 250, 260, 270) à fermer la porte du capot (210, 212).

14. La méthode selon la revendication 11, dans laquelle provoquer la mise sous tension du moteur électrique (360) en fonction de la détection que du courant est tiré par l'électrovanne (340, 350) comporte provoquer la mise sous tension du moteur électrique (360) seulement en fonction de la détection que du courant est tiré par l'électrovanne (340, 350).

15. La méthode selon la revendication 11, dans laquelle détecter que du courant est tiré par l'électrovanne (340, 350) comprend détecter qu'une intensité du courant tiré par l'électrovanne (340, 350) est supérieure à 300 mA.

16. La méthode selon la revendication 11, dans laquelle provoquer la mise sous tension du moteur électrique (360) en fonction de la détection que du courant est tiré par l'électrovanne (340, 350) comporte le passage automatique d'un second interrupteur de commande (382) d'une position ouverte à une position fermée.

17. La méthode selon la revendication 16, dans laquelle le passage du second interrupteur de commande (382) d'une position ouverte à une position fermée conduit à une activation de la pompe hydraulique (370).

18. Un contrôleur de système électrique (380), le contrôleur comportant :
un processeur (410);
un support d'informations non transitoire lisible par ordinateur, le support d'informations non transitoire lisible par ordinateur comprenant une logique de commande qui, lors de l'exécution par le processeur (410), provoque les étapes de la méthode d'activation d'une porte de capot selon l'une quelconque des revendications 11 à 13 et 15 à 17.

19. Un système mis en œuvre par ordinateur configuré pour exécuter la méthode selon l'une quelconque des revendications 11 à 17.

20. Un aéronef (10) comprenant le système mis en œuvre par ordinateur selon la revendication 19.

21. Un support d'informations non transitoire lisible par ordinateur comprenant des instructions exécutables par ordinateur qui provoque l'exécution par un système de la méthode selon l'une quelconque des revendications 11 à 17.
